# EUROPEAN PATENT SPECIFICATION

(11) **EP 1 842 888 B1**
(45) Date of publication and mention of the grant of the patent: **12.10.2011**
(21) Application number: 06702031.3
(22) Date of filing: 06.01.2006
(51) Int. Cl.: C09J 7/02, B43M 5/02, C09J 153/00

(54) **ADHESIVE PRODUCT AND TRANSFER TOOL**
HAFTENDES PRODUKT UND ÜBERTRAGUNGSWERKZEUG
PRODUIT ADHÉSIF ET OUTIL DE TRANSFERT

(30) Priority: 25.01.2005 JP 2005016525
(43) Date of publication of application: 10.10.2007
(73) Proprietor: Kokuyo S&T Co.,Ltd., Osaka-shi Osaka 537-0013 (JP); KURARAY CO., LTD., Kurashiki-shi, Okayama 710-8622 (JP)
(72) Inventor: KASAHARA, Hiroyuki, Higashinari-ku, Osaka-shi, Osaka, 537-0013 (JP); KAWASHITA, Kazushige, Higashinari-ku, Osaka-shi, Osaka, 537-0013 (JP); KURIHARA, Toyoaki, Ibaraki, 3050841 (JP); KUNIMUNE, Tetsuya, Ibaraki, 3050841 (JP); HAMADA, Kenichi, Ibaraki, 3050841 (JP)
(74) Representative: TBK
(86) International application number: PCT/JP2006/300060
(87) International publication number: WO 2006/080181

(56) References cited:
- WO-A1-03/068836
- JP-A- 11 323 072
- JP-A- 2003 206 463

## Description

### TECHNICAL FIELD

The present invention relates to an adhesive product to attach papers such as an envelope.

### BACKGROUND ART

Conventionally, an adhesive product provided with a base material and an adhesive layer that is formed on the base material and that is made up mainly of an adhesive (further, "an adhesive" means "a pressure-sensitive adhesive") is mostly used in an office use. Such an adhesive product is broadly categorized into two kinds. One is an adhesive product in which the base material is pasted onto paper, etc. as a supporter in the state that the base material and the adhesive layer are attached prior. Specific examples of such product are an adhesive tape and a seal. Another is a product in which the base material is configured to have a peeling property from the adhesive layer and two adherends can be attached. A specific example of such product is a pressure-sensitive transfer adhesive tape (below, mentioned as a pressure-sensitive transfer tape) sold as a so-called "tape paste" in the market. Such a pressure-sensitive transfer tape is generally loaded in a transfer device in the state of being wound up in a roll, and handled in the state that only a desired length can be preferably transferred (for example, refer to Patent Document 1).

On the other hand, the performance demanded of the attaching force of the adhesive product is considered to be different depending on the use of the adhesive product. Until now, many adhesive products have been developed satisfying the performance in which the product is peeled without leaving the adhesive on the adherend at all and without damaging the adherend (for example, refer to Non-Patent Document 1).
Patent Document 1: Japanese Unexamined Patent Publication No. 2001-271041 (refer to Tables 1 and 2)
Non-Patent Document 1: "KOKUYO 2005 Office Supplies," compiled by KOKUYO Co., Ltd., December, 2004, p. 674

JP 11323072 (A) describes a composition for pressure sensitive adhesive consists of (A) a block copolymer which has a structure of the formula -[a1]-[b]-[a2]-, in the main chain, [a1] and [a2] are each a polymer block mainly consisting of an alkyl methacrylate which has a glass transition temperature of >=+110 deg.C and degree of syndiotacticity >=70%; [b] a polymer block mainly consisting of an alkyl (meth)acrylate which has a glass transition temperature of >=+30 deg.C}, and (B) a diblock copolymer at least including a polymer block mainly consisting of an alkyl (meth)acrylate.

### DISCLOSURE OF THE INVENTION

### PROBLEMS TO BE SOLVED BY THE INVENTION

However, as a completely separate consideration from the case of having an objective not to damage the adherend, in the case of using paper as the adherend for example, when a peeling operation is performed to peel the adhesive product or the adhesive from the adherend, there is the case that to certainly damage the surface layer of the paper is demanded.

Explaining specifically by showing examples, in the case of sending important documents such as documents related to personal information in an envelope, from the point of view of security such as protection of personal information and maintaining secrecy, a sealing is necessary so that whether the envelope was opened or not by a third party can be clearly distinguishable by the addressee. In detail, to fasten and to seal the envelope becomes an absolute requirement so that the surface of paper making up the envelope gets damaged when the adhesive layer is intended to be peeled. In addition, the adhesive product is also used in bookbinding of a notebook, a diary, a publication, etc. to bind each page. However, it is important to make an operation such as replacing and inserting pages after bookbinding impossible from the point of view of preventing forgery and tampering of the contents. Also in such a case, forgery and tampering can be prevented if a trace that the pages have been separated after bookbinding remains on the page, that is the paper.

Hereinafter, in the present description, such a state that the surface of paper is damaged is described as paper-breaking. Further, adhering of the surface of paper to the adhesive and ripping of the paper in the thickness direction when the adhesive layer of the adhesive product is peeled is described as paper-breaking phenomenon.

That is, a way of thinking of paper-breaking can be newly given as the performance to clearly leave a trace that the adhesive product was peeled by a peeling operation after being attached onto the adherend.

A conventional adhesive product can break a paper that lacks in strength. However, it cannot break almost all papers that are normally used, and because the attaching power is not set by the standing viewpoint to be able to certainly break a fine-quality paper used when storing important documents, specifically a thick fine-quality paper such as a white envelope, it is the present condition that a user cannot use the adhesive product in the use of sealing the important documents described above in an envelope, etc. without worrying.

Therefore, the present invention focuses on such inconvenience and provides an adhesive product capable of maintaining security effectively.

### MEANS FOR SOLVING THE PROBLEMS

The present invention took the action as follows in order to achieve such an objective. That is, the adhesive product according to the present invention is an adhesive product having an adhesive layer and a base material supporting the adhesive layer and capable of attaching at least paper and other members through the above-mentioned adhesive layer, in which the adhesive configuring the above-mentioned adhesive layer essentially consists of an acrylic adhesive, and the acrylic adhesive consists of block copolymer composition 100 parts by mass consisting of diblock copolymer 40 to 60 parts by mass of weight average molecular weight 10,000 to 100, 000 and triblock copolymer 60 to 40 parts by mass of weight average molecular weight 10,000 to 100,000 represented by the following Formulas (I) and (II) consisting of methylmethacrylate polymer block (M) of 5 to 40% by mass and butyl acrylate polymer block (A) of 60 to 95% by weight

M-A (I)

M-A-M (II),

acrylic oligomer tackifier 10 to 35 parts by mass of weight average molecular weight 800 to 5, 000, and rosin ester-based tackifier and/or hydrogenated rosin ester-based tackifier 80 to 130 parts by mass.

Here, the acrylic adhesive configuring the adhesive product according to the present invention has an attaching power enough to break papers at room temperature, and has very good handling property as a hot melt type adhesive because it becomes a liquid form showing fluidity in the temperature range of 130°C or more for example. Further describing about the acrylic adhesive, each of the weight average molecular weight (Mw) of the above-mentioned diblock copolymer and the above-mentioned triblock copolymer constituting the block copolymer composition is preferably 10,000 to 100,000, more preferably 30,000 to 100, 000, and further preferably 40, 000 to 100, 000 from the point of view of being able to keep up both the cohesion power and the hot melt coating property in the case of using them as a compounded component of the adhesive.

Further, in the whole of the diblock copolymer and the triblock copolymer represented with the above-mentioned Formulas (I) and (II), when the ratio of the total mass of methylmethacrylate polymer block M in the case of considering the total mass of the polymer block as a standard is too small, the cohesive power becomes small and in the case of using as the adhesive component, there is a tendency that an adhesive characteristic such as holding force (shear creep strength) of the obtained adhesive composition decreases. Contrarily, when the ratio of the total mass of methylmethacrylate polymer block M is too large, in the case of using as an adhesive composition, there is a tendency that the adhesive characteristics (especially, adhesive power) becomes insufficient. From these points, the ratio of methylmethacrylate polymer block M included in the diblock copolymer and the triblock copolymer is necessarily in the range of 5 to 40% by mass, and more preferably in the range of 5 to 30% by mass.

Then, the weight average molecular weight (Mw) of the acrylic oligomer based tackifier is preferably 800 to 5,000, more preferably 1,000 to 4,000, and further preferably 2,500 to 3,000 from the point of view of being able to keep up both the cohesion power and the hot melt coating property in the case of using it with the above-mentioned block copolymer as a compounded component of the adhesive.

The compounding ratio of a block copolymer composition, an acrylic oligomer-based tackifier, and a rosin ester-based tackifier and/or a hydrogenated rosin ester-based tackifier, which constitute an acrylic adhisive, is preferably an acrylic oligomer-based tackifier 10 to 35 parts by mass and a rosin ester-based tackifier and/or a hydrogenated rosin ester-based tackifier 80 to 130 parts by mass relative to a block copolymer composition 100 parts by mass in order for the adhesive product according to the present invention to be able to preferably break paper, more preferably an acrylic oligomer-based tackifier 15 to 30 parts by mass and a rosin ester-based tackifier and/or a hydrogenated rosin ester-based tackifier 85 to 120 parts by mass relative to a block copolymer composition 100 parts by mass, and further preferably 90 to 110 parts by mass.

Then, in the adhesive product according to the present invention, the above-mentioned other members may be able to attach to the adhesive, and of course it may be the same kind as the above-mentioned paper, other paper than the above-mentioned paper, or other than paper. Moreover, it doesn't matter whether the base material and the adhesive layer are attached or not. Specifically, a pressure sensitive transfer tape having a different constituent from the above-mentioned paper and the above-mentioned other members can be mentioned as the adhesive product configured so that the base material can be peeled from the adhesive layer. Further, a seal and an adhesive tape fall under an adhesive product in which themainbodyofthetape, which is thebasematerial, is configured not to be peeled from the adhesive layer among the adhesive products in the present invention. Further, the adhesive provided on the base material is not limited to an adhesive coated on the entire face of the base material, and for example, may be an adhesive coated intermittently on the base material, in other words, an adhesive in which the region not coated is partially provided previously.

With such an adhesive product, because the paper becomes in the state of being impossible to restore, that is the paper is ripped in the thickness direction due to the occurrence of a paper-breaking phenomenon when the adhesive is peeled from the paper with a peeling operation after the paper and the member on the other side were fastened through the adhesive layer by using the acrylic adhesive having the above-mentioned composition, a trace that the adhesive product was attached once can be left inevitably on the paper. Then, when such an adhesive product is used in the sealing of an envelope etc. for example, sealing can be performed with high security in that a trace that the envelope was opened can be certainly left. Further, when the adhesive product is used in the use of bookbinding, forgery and tampering after bookbinding can be effectively prevented.

Then, in the adhesive product according to the present invention, the thickness dimension of the above-mentioned adhesive layer is set to 5 to 100 µm.

That is, in the process of manufacturing the adhesive product according to the present invention, in any case of adopting any of various methods that can coat the base material with the above-mentioned acrylic adhesive, in order to coat the base material more accurately and effectively with the adhesive while configuring the adhesive so that the paper-breaking phenomenon can occur, the thickness dimension of the adhesive layer is preferably set to 5 to 100 µm. Here, when the thickness dimension is 5 µm or less, it becomes difficult to coat certainly on the base material, and when the thickness dimension is 100 µm or more, the coating amount of the adhesive becomes very large, the cost becomes high, and the adhesive incurs cohesion failure and cannot break a paper at the peeling operation because the cohesion power of the adhesive decreases depending on the case. Then, considering easiness of the above-mentioned coating and the manufacturing cost, the preferable the thickness dimension is desirably set to 10 to 80 µm, and the most preferable the thickness dimension is desirably set to 15 to 60 µm.

Further, the adhesive product according to the present invention is an adhesive product used as a seal, an adhesive tape, etc., in which the above-mentioned adhesive layer is provided so as to disable to be peeled from the main body of the seal or the main body of the adhesive tape, which is the above-mentioned base material.

That is, the adhesive product according to the present invention is desirably used as a seal, an adhesive tape, etc. by providing the adhesive layer so that it cannot be peeled from the above-mentioned base material as the main body of the tape or the main body of the adhesive tape.

Moreover, the adhesive product according to the present invention is an adhesive product used as a pressure sensitive transfer adhesive tape, etc., in which the above-mentioned adhesive layer is provided so as to enable to be peeled from the above-mentioned base material.

That is, by providing the adhesive layer to the base material so that it can be peeled, the adhesive product can be preferably used as a pressure sensitive transfer adhesive tape, etc. Here, in order to provide the adhesive layer so that is can be peeled, examples of the base material are materials adopting a plastic film such as polyethylene (PE), polyethylene terephthalate (PET), polypropylene (PP), and polyvinyl chloride (PVC), a paper such as a glassine paper, a metal foil, etc. Further, a base material may be adopted in which a peeling layer consisting of a silicone resin, a fluorine resin, etc. is provided in order to give a peeling effect to a surface that does not have the peeling effect.

Then, the present invention is a transfer device equipped with the adhesive product described above.

That is, by adopting the above-mentioned pressure sensitive transfer adhesive tape to the transfer device, it can be a transfer device that can be preferably used by a user.

### EFFECT OF THE INVENTION

According to the adhesive product according to the present invention, because the paper becomes in the state of being impossible to restore, that is the paper is ripped in the thickness direction due to the occurrence of a paper-breaking phenomenon when the adhesive is peeled from the paper with a peeling operation after the paper and the member on the other side were fastened through the adhesive layer by using the acrylic adhesive having the above-mentioned composition, a trace that the adhesive product was attached once can be left inevitably on the paper. Then, when such an adhesive product is used in the sealing of an envelope etc. for example, sealing can be performed with high security in that a trace that the envelope was opened can be certainly left. Further, when the adhesive product is used in the use of bookbinding, because a trace that pages are separated after bookbinding can be inevitably left on the page, that is a paper, forgery and tampering after bookbinding can be effectively discovered or can be prevented from happening.

Then, if it is a transfer device equipped with the adhesive product, it can be a device equipped with an adhesive product with high reliability for a user and the adhesive product.

### BRIEF DESCRIPTION OF THE DRAWINGS

Figure 1 is an external view of the transfer device according to one embodiment of the present invention.
Figure 2 is a plan view showing a configuration of the transfer device according to the same embodiment.
Figure 3 is a view schematically showing a configuration of the pressure sensitive transfer tape according to the same embodiment.
Figure 4 is an external view showing the adhesive product according to a modification of the same embodiment.
Figure 5 is a view schematically showing an evaluation standard of the peeling test on the actual object according to one example of the present invention.

### BEST MODE FOR CARRYING OUT THE INVENTION

Hereinafter, a transfer device A equipped with a pressure sensitive transfer tape 1 that is the adhesive product according to the embodiment of one example of the present invention is explained by referring to figures.

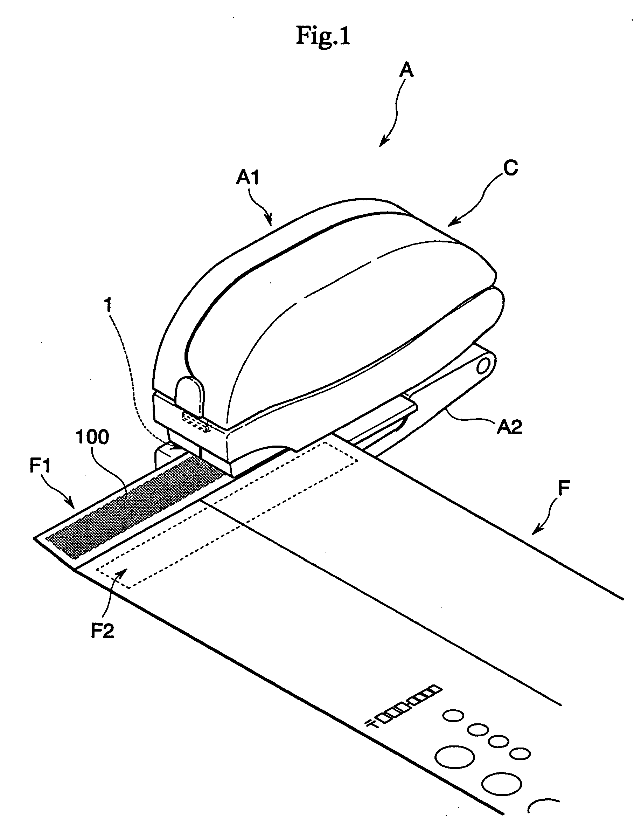

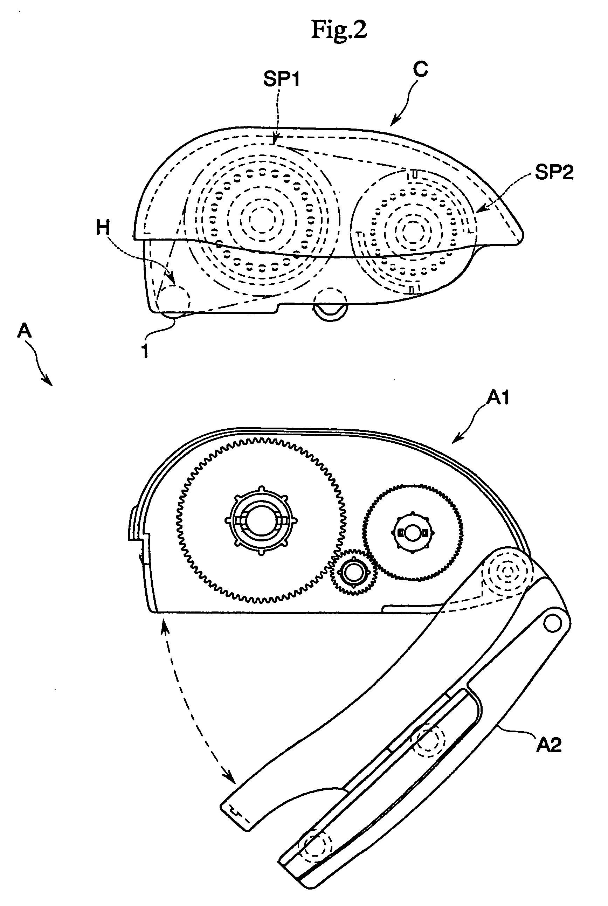

As shown in Figures 1 and 2, this transferdeviceAcomprises a cartridge C storing the pressure sensitive transfer tape 1, a transfer device main body A1 that is loaded with the cartridge C and can preferably send out the pressure sensitive transfer tape 1, an arm A2 that can sandwich a white envelope F between itself and the transfer device main body A1 when an adhesive 100 that is described later is transferred to the white envelope. Then, Figure 1 shows the situation in which the adhesive 100 that is described later applied on the surface of a film 12, which is a base material, that is described later is transferred along the edges of a fold F1 by sliding the white envelope F for example while sandwiching the fold F1 of the white envelope F with the transfer device main body A1 and the armA2. Moreover, after the adhesive 100 is pressed and transferred onto the fold F1, the state is made in which the fold F1 and an opening end neighbor F2 are fastened and the white envelope is certainly sealed by folding the fold F1 through an opening end of the white envelope F and pressing over in the state that the adhesive 100 exists between the fold F1 and the opening end neighbor F2 shown in a broken line.

Here, the pressure sensitive transfer tape 1, which is the adhesive product according to the present embodiment, has an adhesive layer 10 and the film 12, which is a base material supporting the adhesive layer 10, capable of attaching at least paper and the fold F1 and the opening end neighbor F2 of the white envelope F, which are other members, and in which the adhesive 100 constituting the adhesive layer 10 consists of an acrylic adhesive which is described later as a main body.

Hereinafter, a specific structure and configuration of the pressure sensitive transfer tape 1 is described in detail based on the structure of the transfer device A.

As shown in Figure 2, in the transfer device A, the transfer device main body A1 and the cartridge C substantially a halved structure, and it has a structure in which only the cartridge C can be preferably exchanged by exposing a part of the cartridge C. That is, the cartridge C is exchanged with a new one in the state that the pressure sensitive transfer tape 1 which is a consumable, a winding off spool SP1, a take-up spool SP2, a transfer head H, etc. which are a part of a sending-out mechanism are supplemented in the refilling cartridge C as the exchanging parts. Moreover, the transfer device main body A1 has non-exchanging parts which are a part of the sending mechanism.

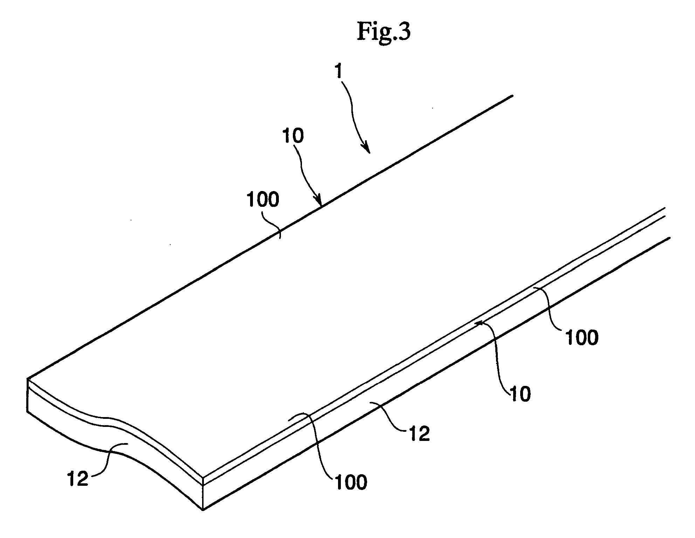

As schematically shown in Figure 3, the pressure sensitive transfer tape 1 has the adhesive layer 10 consisting of the adhesive 100 which is an acrylic adhesive which is described later and the film 12 which is a base material supporting the adhesive 10, and the above-mentioned adhesive layer 10 is made by coating the surface of the film 12 with the adhesive 100. Moreover, a mode that the adhesive 100 is applied on the surface of the film 12 is not limited to an application of the entire face, and for example, it may be a mode that a region which is not coated is partially provided previously.

In the present embodiment, the film 12 for example consists of a polyethylene terephthalate (PET) film which is peelable from the adhesive 100. However, it is not limited to the polyethylene terephthalate, and it may be a film that is peelable from the adhesive 100 which is an acrylic adhesive. Moreover, films having a peeling property from an acrylic adhesive include a plastic film such as polyethylene (PE), polypropylene (PP), and polyvinyl chloride (PVC), a paper such as a glassin paper, and a metal foil. Further, the films include films in which a peeling layer consisting of a silicon resin, a fluorine resin, etc. is provided on a surface that does not have a peeling effect in order to give it a peeling effect.

The adhesive layer 10 is made by applying the adhesive 100 which is the above-mentioned acrylic adhesive. In the present embodiment, the thickness of the adhesive layer 10 applied on the surface of the film 12 is set to 40 µm. Moreover, the existing methods can be preferably adopted to the method of applying the adhesive 100 on the surface of the film 12.

Subsequently, the composition of the acrylic adhesive adopted as the adhesive 100 is explained.

The adhesive 100 is a mixture of a diblock copolymer 101 (not shown in the figures) constituting a block copolymer composition: 100 parts by weight, a triblock copolymer 102 (not shown in the figures) constituting a block copolymer composition: 100 parts by weight, a first tackifier 103 (not shown in the figures): 40 to 60 parts by weight, and a second tackifier 104 (not shown in the figures): 200 parts by weight.

The diblock copolymer 101 specifically is a diblock copolymer of weight average molecular weight 10, 000 to 100, 000 represented with Formula M-A consisting of a methyl methacrylate polymer block M of 5 to 40% by mass and a butyl acrylate polymer block A. More specifically, as a diblock copolymer satisfying the above conditions, LA polymer #1114 manufactured by KURARAY CO., LTD. is adopted as the diblock copolymer 101 in the present embodiment.

The triblock copolymer 102 specifically is a triblock copolymer of weight average molecular weight 10, 000 to 100,000 represented with Formula M-A-M consisting of a methyl methacrylate polymer block M of 5 to 40% by mass and a butyl acrylate polymer block A. More specifically, as a triblock copolymer satisfying the above conditions, LA Polymer #2140 manufactured by KURARAY CO., LTD. is adopted in the present embodiment.

The first tackifier 103 is an acrylic oligomer-based tackifier of weight average molecular weight 800 to 5, 000. More specifically, as a tackifier satisfying the above conditions, ARUFON UP-1000 manufactured by TOAGOSEI CO., LTD. is adopted in the present embodiment.

For the second tackifier 104, SUPERESTER A115 manufactured by Arakawa Chemical Industries, Ltd., which is a rosin ester-based tackifier, is adopted as the second tackifier 104 in the present embodiment.

As described above, the pressure sensitive transfer tape 1 which is the adhesive product according to the present embodiment, can certainly make paper-breaking when the attached part is peeled with a peeling operation even in the case that an envelope consisting of a paper with a high surface strength such as the white envelope F is sealed by adopting the adhesive 100 that is the above-mentioned acrylic adhesive. Then, the transfer device A according to the present embodiment can contribute to maintaining security that a user can safelyperform sealing, etc. of the white envelope F by adopting the pressure sensitive transfer tape 1.

Further, by setting the thickness dimension of the adhesive layer 10 to 5 to 100 µm, not only the adhesive can be preferably applied onto a film 12, but also the adhesive 100 can more preferably make paper-breaking.

The embodiment of the present invention is explained above. However, the specific configuration of each part is not limited only to the above-mentioned embodiment, and it can be modified variously within the range of not deviating from the purpose of the present invention.

For example, in the above-mentioned embodiment, by configuring the film 12 which is a base material to be able to peel from the adhesive layer 10, the adhesive product according to the present invention is configured to be used in the transfer device A as the pressure sensitive transfer tape 1. However, the base material may be provided non-peelably to the adhesive layer.

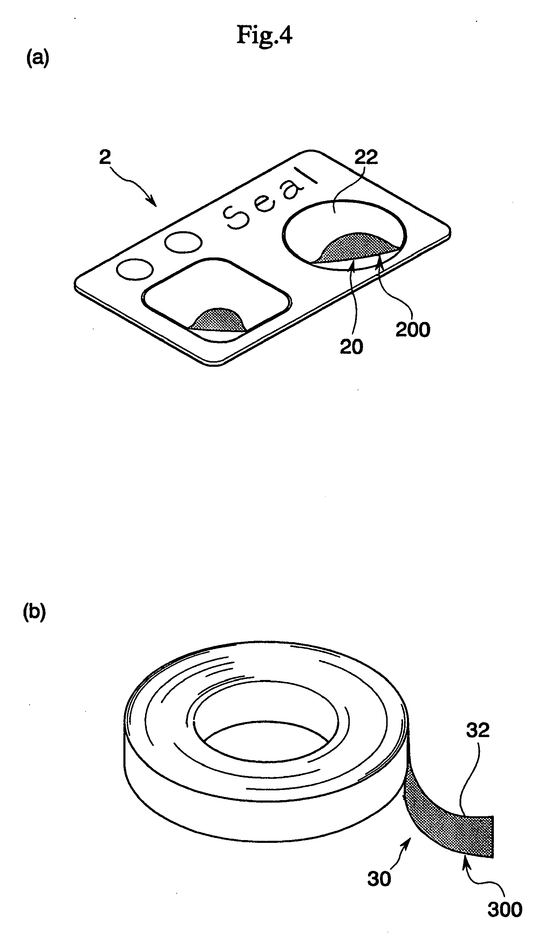

That is, by the base material serving as another member according to the present invention, the adhesive product of the present invention can be used as a seal 2 shown in Figure 4 (a) and an adhesive tape 3 shown in Figure 4 (c).

Hereinafter, the seal 2 and the adhesive tape 3 according to the modification in the present embodiment are explained. Figure 4 (a) shows the seal 2 in which the adhesive layer 20 consisting of an adhesive 200 which has the same combination as the above-mentioned adhesive 100 is provided non-peelably on the back face of a seal main body 22 which is the base material. Then, the seal 2 is normally supported by a seal mount D configured peelably to an adhesive layer 20, and the seal 2 is peeled from the seal mount D when it is used. In such a way, the adhesive product according to the present invention can configure the seal 2 which can preferably make paper-breaking.

Further, the adhesive tape 3 can be preferably used in office use and bookbinding use for example. Also for the adhesive tape 3, an adhesive tape 3 that can preferablymake paper-breaking can be configured by providing an adhesive layer 30 consisting of an adhesive 300 which has the same combination as the above-mentioned adhesive 100. If the adhesive tape is as explained, in the case of adopting the adhesive tape 3 to bookbinding use, because the trace can be certainly left by breaking pages in case forgery and tampering such as switching pages after bookbinding are performed, forgery and tampering can be discovered or prevented from happening.

Other specific configurations of each part are also not limited to the above-mentioned embodiment, and it can be modified variously within the range of not deviating from the purpose of the present invention.

### EXAMPLES

Subsequently, the present invention is explained more specifically by giving examples. However, the present invention is not limited to these examples.

### <Production of Sample>

### (a) Adhesive Composition

Two kinds of acrylic block polymers and three kinds of tackifiers were used as an adhesive composition. LA Polymer #2140 manufactured by KURARAY CO., LTD. which is an acrylic triblock polymer and LA Polymer #1114 manufactured by KURARAY CO., LTD. which is an acrylic diblock copolymer were used as the acrylic block polymer. Further, ARUFON UP-1000 manufactured by TOAGOSEI CO. , LTD. which is an acrylic tackifier, SUPER ESTER A115 manufactured by Arakawa Chemical Industries, Ltd. which is a rosin ester-based tackifier, and ARKON P100 manufactured by Arakawa Chemical Industries, Ltd. which is a hydrocarbon-based tackifier were used as a tackifier.

### (b) Production of Pressure Sensitive Transfer Tape

The pressure sensitive transfer tape according to Examples 1 to 3 and Comparative Examples 1 to 10 was produced by applying an acrylic adhesive in which each of the above-mentioned block polymers and tackifiers were compounded at the ratio shown in Table 1 onto a film made by polyethylenephthalate 30 to 40 µm.

### <Testing Method>

On each of the pressure sensitive transfer tapes according to Examples 1 to 3 and Comparative Examples 1 to 10, whether there was a paper-breaking performance, that is a paper-breaking phenomenon to paper, or not, the initial tack (adhesive power) of the adhesive layer and compatibility of the adhesive layer were investigated.

### (a) Paper-Breaking Performance

On each of the pressure sensitive transfer tapes according to the Examples and Comparative Examples, whether there was a paper-breaking phenomenon on a piece of paper in which the white envelope on the market was cut into a rectangular shape of 25 mm width or not was investigated. Here, in the breaking-paper performance test, WHITE ENVELOPE WP2270 (square-shaped No. 2, A4 size) manufactured by Okina Co. , Ltd. was adopted as the white envelope.

A first press bonding operation was performed by attaching the produced pressure sensitive transfer tape to the above-mentioned piece of paper and reciprocating a roller of 2 kg back and forth once on the film at speed of 10 mm/s. After peeling the film from the adhesive layer, a second press bonding operation was performed by attaching the same kind of piece of paper on the adhesive layer, making it in a state that the adhesive layer exists between two pieces of paper, and reciprocating a roller of 2 kg back and forth twice at speed of 10 mm/s. Then, one of the two pieces of paper in which the second press bonding was finished was peeled at speed of 1 mm/s in a distance of 15 mm.

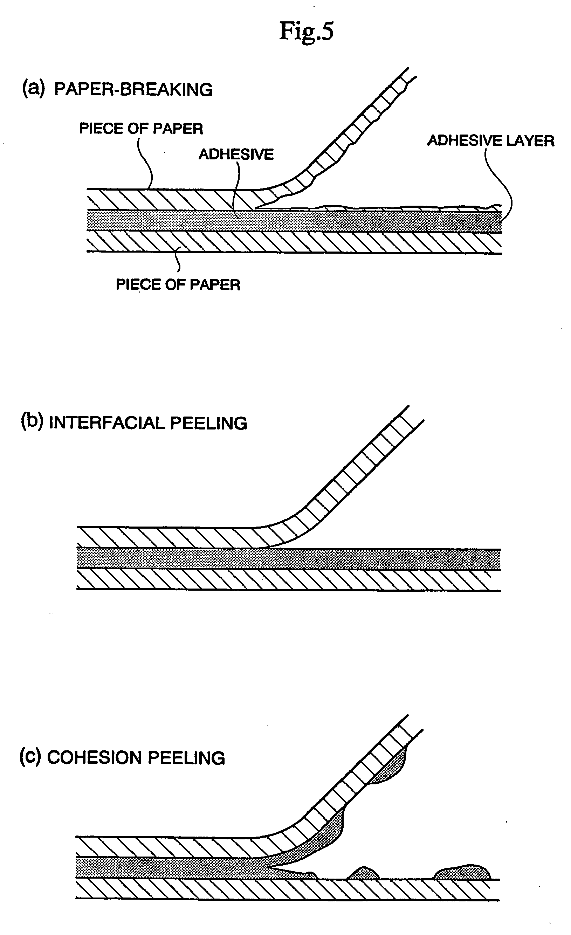

For the part that was peeled, as schematically shown in Figure 5, O was marked for the part in which a piece of paper was ripped in the thickness direction with a state that the surface layer of the piece of paper is attached on the surface of the adhesive layer as it has the paper-breaking performance (Figure 5 (a)), x1 was marked for the part in which it was peeled with a state that the adhesive layer and the piece of paper were separated as an interfacial peel (Figure 5 (b)), and x2 was marked for the part in which it was peeled with a state that the adhesive was attached to the both of the pieces of paper as a cohesion peel (Figure 5 (c)) in Table 1. Further, Δ was marked for the part that was made paper-breaking when pressured and bonded harder than the above-mentioned press bonding operation in Table 1.

### (b) Initial Tack

The initial tack performance at room temperature was investigated. The ones in which the surface of the adhesive layer was determined to have an adhesive power were marked as O as they have the initial tack, and the ones in which the surface of the adhesive layer was determined to have little adhesive power were marked as X as they have no initial tack in Table 1.

### (c) Compatibility

The compatibility was determined by visually observing the adhesive layer formed on the film. The one with the adhesive layer having transparency were marked with O as it has compatibility, and the ones without transparency was marked with × as it has no compatibility in Table 1.

Then, the evaluation according to the above-mentioned various measurements is shown in Table 1.

**[Table 1]**

| | | EXAMPLE | | | COMPARATIVE EXAMPLE | | | | | | | | | |
|---|---|---|---|---|---|---|---|---|---|---|---|---|---|---|
| | | 1 | 2 | 3 | 1 | 2 | 3 | 4 | 5 | 6 | 7 | 8 | 9 | 10 |
| COMPOUNDING | ACRYLIC TRIBLOCK COPOLYMER | 100 | 100 | 100 | 100 | | 100 | 100 | 100 | 100 | 100 | 100 | 100 | 100 |
| | ACRYLIC DIBLOCK COPOLYMER | 100 | 100 | 100 | | 100 | 100 | 100 | | 100 | 100 | 100 | 100 | 100 |
| | ACRYLIC OLIGOMER-BASED TACKIFIER | 40 | 50 | 60 | | | | 50 | | | 75 | 60 | 50 | 50 |
| | ROSIN ESTER-BASED TACKIFIER | 200 | 200 | 200 | | | | | | 200 | 200 | 150 | 300 | 500 |
| | HYDROCARBON-BASED TACKIFIER | | | | | | | | 200 | | | | | |
| PERFORMANCE | PAPER-BREAKING PERFORMANCE | ○ | ○ | ○ | ×1 | ×1 | ×1 | ×2 | Δ | Δ | ×2 | ×1 | ×2 | ×2 |
| | INITIAL TACK | ○ | ○ | ○ | × | ○ | × | ○ | × | × | ○ | ○ | × | × |
| | COMPATIBILITY | ○ | ○ | ○ | | | ○ | ○ | × | ○ | ○ | ○ | ○ | ○ |

From the above-mentioned result, Examples 1, 2, and 3 have all the paper-breaking performance, initial tack, and compatibility, and they were found to be superior in performance to be adopted to a pressure sensitive transfer tape and other adhesive products.

On the other hand, for Comparative Examples, interfacial peeling was shown in any of Comparative Examples 1 to 3 configured only with block polymer, and Comparative Examples 1 and 3 have no initial tack. Further, Comparative Example 4 in which a rosin ester-based tackifier was lacking from the compounding of Example 2 has compatibility and initial tack. However, it can not make paper-breaking and shows cohesion peeling. Comparative Example 5 was the only one in which a hydrocarbon-based tackifier was compounded among the compoundings tested this time. However, the paper-breaking performance was marked with Δ, and had no initial tack and compatibility. Further, the paper-breaking performance was marked with Δ also in Comparative Example 6 although it has compatibility. Comparative Example 7 in which more acrylic oligomer-based tackifier was compounded compared with the Examples has compatibility and initial tack. However, it had no paper-breaking performance and shows cohesion peeling. Comparative Example 8 in which the compounding ratio of a rosin ester-based tackifier was set lower than Example 3 has compatibility and initial tack. However, it shows interfacial peeling. Then, Comparative Examples 9 and 10 in which the compounding ratio of a rosin ester-based tackifier was set higher than Example 2 showed no initial tack, but cohesion peeling.

## Claims

1. An adhesive product having an adhesive layer and a base material supporting the adhesive layer that is capable of attaching at least paper and other members through the adhesive layer,
wherein an adhesive configuring the adhesive layer essentially consists of an acrylic adhesive and the acrylic adhesive consists of
block copolymer composition 100 parts by mass consisting of diblock copolymer 40 to 60 parts by mass of weight average molecular weight 10,000 to 100,000 and triblock copolymer 60 to 40 parts by mass of weight average molecular weight 10,000 to 100,000 represented by the following Formulas (I) and (II) comprising methylmethacrylate polymer block (M) of 5 to 40% by mass and butyl acrylate polymer block (A)
M-A (I)
M-A-M (II),
acrylic oligomer tackifier 10 to 35 parts by mass of weight average molecular weight 800 to 5,000, and
rosin ester-based tackifier and/or hydrogenated rosin ester-based tackifier 80 to 130 parts by mass.

2. The adhesive product according to claim 1, wherein the thickness dimension of the above-mentioned adhesive layer is set to 5 to 100 µm.

3. The adhesive product according to claim 1 or 2 used as a seal or an adhesive tape, wherein the adhesive layer is provided so as to disable to be peeled from the main body of the seal or the main body of the adhesive tape, which is the base material.

4. The adhesive product according to claim 1, 2, or 3 used as a pressure sensitive transfer adhesive tape, wherein the adhesive layer provided so as to enable to be peeled from the base material.

5. A transfer device comprising the adhesive product according to claim 4.

## Patentansprüche

1. Haftmittelprodukt mit einer Haftmittelschicht und einem Grundmaterial, das die Haftmittelschicht unterstützt, das fähig zum Anbringen von zumindest Papier und anderen Bauteilen durch die Haftmittelschicht ist,
wobei ein Haftmittel, das die Haftmittelschicht konfiguriert, im Wesentlichen aus einem Acrylhaftmittel besteht und das Acrylhaftmittel bestehend aus
100 Massenteilen einer Blockcopolymerzusammensetzung, bestehend aus 40 bis 60 Massenteilen eines Diblockcopolymers mit einem gewichtsgemittelten Molekulargewicht von 10000 bis 100000 und 60 bis 40 Massenteilen eines Triblockcopolymers mit einem gewichtsgemittelten Molekulargewichts von 10000 bis 100000, dargestellt durch die folgenden Formeln (I) und (II), umfassend ein Methylmethacrylatpolymerblock (M) mit 5 bis 40 Massenprozent und ein Butylacrylatpolymerblock (A)
M-A (I)
M-A-M (II)
10 bis 35 Massenteilen eines Acryloligomer-Klebrigmachers mit einem gewichtsgemittelten Molekulargewichts von 800 bis 5000, und
80 bis 130 Gewichtsteilen eines Harzester-basierten Klebrigmachers und/oder eines hydrierten Harzester-basierten Klebrigmachers.

2. Haftmittelprodukt nach Anspruch 1, wobei die Dickedimension der oben genannten Haftmittelschicht auf 5 bis 100 µm eingestellt ist.

3. Haftmittelprodukt nach Anspruch 1 oder 2, das als eine Versiegelung oder ein Haftmittelstreifen verwendet wird, wobei die Haftmittelschicht bereitgestellt ist, um das vom Grundkörper der Versiegelung oder des Grundkörpers des Haftmittelstreifens, welches das Grundmaterial, abgeblättert sein zu unterbinden.

4. Haftmittelprodukt nach Anspruch 1, 2 oder 3, das als ein druckempfindlicher Übertragungshaftmittelstreifen verwendet wird, wobei die Haftmittelschicht bereitgestellt ist, um das von dem Grundmaterial abgeblättert sein zu ermöglicht.

5. Übertragungsvorrichtung, die das Haftmittelprodukt nach Anspruch 4 umfasst.

## Revendications

1. Produit adhésif ayant une couche adhésive et un matériau de base soutenant la couche adhésive qui est capable de coller au moins un papier et d'autres organes au moyen de la couche adhésive,
où un adhésif configurant la couche adhésive se compose essentiellement d'un adhésif acrylique et l'adhésif acrylique se compose
100 parties en masse d'une composition de copolymère à blocs composée de 40 à 60 parties en masse d'un copolymère diblocs de poids moléculaire moyen pondéral allant de 10000 à 100000 et de 60 à 40 parties en masse d'un copolymère triblocs de poids moléculaire moyen pondéral de 10000 à 100000 représentés par les formules (I) et (II) suivantes comprenant
un bloc (M) de polymère de méthacrylate de méthyle de 5 à 40% en masse et un bloc (A) de polymère d'acrylate de butyle
M-A (I)
M-A-M (II),
10 à 35 parties en masse d'un agent poisseux d'oligomère acrylique de poids moléculaire moyen de 800 à 5000, et
80 à 130 parties en masse d'un agent poisseux à base d'ester de colophane et/ou d'agent poisseux à base d'ester de colophane hydrogéné.

2. Produit adhésif selon la revendication 1, où la dimension d'épaisseur de la couche adhésive mentionnée ci-dessus est réglée à 5 à 100 µm.

3. Produit adhésif selon la revendication 1 ou 2 utilisé comme sceau ou comme ruban adhésif, où la couche adhésive est prévue de manière à ne pas être détachable du corps principal du sceau ou du corps principal du ruban adhésif, selon que l'on utilise l'un ou l'autre comme matériau de base.

4. Produit adhésif selon la revendication 1, 2 ou 3 utilisé comme ruban adhésif de transfert sensible à la pression, où la couche adhésive prévue afin d'être détachable du matériau de base.

5. Dispositif de transfert comprenant le produit adhésif selon la revendication 4.
